# EUROPEAN PATENT SPECIFICATION

(11) **EP 2 318 452 B1**
(45) Date of publication and mention of the grant of the patent: **10.10.2012**
(21) Application number: 09807411.5
(22) Date of filing: 17.08.2009
(51) Int. Cl.: C08L 23/16, C08J 5/18, C08L 23/10

(54) **HEAT SEALABLE MONOAXIALLY-ORIENTED PROPYLENE-BASED FILM WITH DIRECTIONAL TEAR**
WÄRMEVERSIEGELBARE MONOAXIAL AUSGERICHTETE FOLIE AUF PROPYLENBASIS MIT DIREKTIONALEM ABRISS
FILM THERMOSCELLABLE À BASE DE PROPYLÈNE ORIENTÉ MONOAXIALEMENT, AVEC DÉCHIRURE DIRECTIONNELLE

(30) Priority: 15.08.2008 US 89121 P
(43) Date of publication of application: 11.05.2011
(73) Proprietor: Toray Plastics (America) , Inc., N. Kingstown, RI 02852-7500 (US)
(72) Inventor: LEE, Mark, S., North Kingstown RI 02852 (US); KOEHN, Harold, Egon, North Kingstown RI 02852 (US); COLETTA, Emilio, N. Kingstown RI 02852 (US); BROWN, Matthew, H., Wakefield RI 02879 (US)
(74) Representative: Glawe, Delfs, Moll
(86) International application number: PCT/US2009/054020
(87) International publication number: WO 2010/019943

(56) References cited:
- EP-A2- 1 243 612
- WO-A1-01/34389
- US-A1- 2004 072 004
- US-A1- 2004 115 458
- US-A1- 2005 238 874
- US-B1- 6 803 094

## Description

### Field of the Invention

This invention relates to a monoaxially oriented heat sealable propylene-based film which exhibits excellent sealability and directional tearability.

### Background of the Invention

Cans and retortable pouches have been used routinely for the preservation and packaging of pre-cooked foods without additional preservation techniques such as freezing, pickling, salting, drying, or smoking. Such canning and retorting applications subject the food contents to high temperatures for short time periods which effectively cook the contents within the container and/or sterilize the contents such that the contents remain safely preserved until used by the consumer.

With the increasing cost of metals and metal processing, flexible retort pouches are becoming more popular as a cost-effective method to package such pre-cooked foods. Flexible retort pouches are lighter in weight and this saves in transportation costs. In addition, they have excellent printing characteristics and can provide more visual "pop" than paper labels for metal cans.

The typical retort pouch is a laminate of several films. The laminate may include a film layer that can be printed for the marketing of the food product; a barrier film layer to inhibit the diffusion of oxygen and moisture and thus prolong the shelf-life of the product; and a sealant film layer which provides hermetic seals which also helps prevent ingress of gases or microbes that may shorten the shelf-life of the product or cause spoilage. In addition, this sealant film layer may provide high seal strengths that can withstand the retorting process. Typically, this sealant film layer is a non-oriented, cast polypropylene or polyethylene-based film. During retorting, high temperatures are used to sterilize and/or cook the contents and pressure can build up within the pouch as a result of this heating. Thus, the sealant component of the pouch must be formulated to be able to withstand both the high temperatures and pressures that result from the retort process and thus, maintain the integrity of the pouch. Moreover, the formulation of the sealant component (as well as the other components of the pouch) must be compliant to food packaging regulations for retort applications such as stipulated by US Food and Drug Administration (FDA) 21 CFR 177. 1390 which specifies the materials that can be used to construct flexible retort packages and compliance guidelines for migratory testing.

However, the high seal strengths required for retort packaging also make it difficult for the consumer to open the pouch by hand, especially if the retort package is made of all polymeric films. Scissors or sharp implements typically must be used to open such pouches. To make the pouches more user-friendly, notches can be used to enable the consumer to easily initiate a tear and thus open the pouch. However, such a tear can easily result in "zippering" of the pouch whereby the tear is not uniformly parallel to the top edge of the pouch but can become vertical or diagonal to the top of the pouch and cause a potential loss or spillage of the contents during opening. To rectify this, some solutions involve perforating a tear-line with the notch in order to keep the tear directionally parallel to the top of the pouch and thus prevent zippering. These perforations are often accomplished using mechanical perforators or lasers. Some concerns using perforation techniques is not only additional cost, but also the potential compromising of barrier properties since these techniques are essentially perforating the pouch laminate.

Another method to impart directional tear properties may include orienting the cast polypropylene film typically used in retort applications. However, the process of orienting such a film -- either uniaxially or biaxially - typically diminishes the seal properties in that the seal initiation temperature (SIT) of the film is raised and the overall seal strengths are weaker. Without being bound by any theory, this is believed to be due to the fact that the orientation process aligns the amorphous regions into a more ordered configuration, raising the Tg of the film, and thus, seal properties are poorer. This is why unoriented cast polypropylene works well as a sealant film versus, for example, biaxially oriented polypropylene film (BOPP) which generally functions poorly as a sealant film. (This is assuming that no coextruded random copolymer heat sealable resins are used as part of the BOPP film.) There is typically a minimum and maximum range for uniaxial orientation stretching in the machine direction (MDX): less than 3.0 MDX, the film usually suffers from uneven stretching mark defects and over 7.0 MDX, processing stability can be difficult to maintain, as the film may be prone to breakage at this high orientation rate.

US Patent No. 6,541,086 B1 describes a retort package design using an oriented polymer outer film (suitable for printing), an aluminum foil as a barrier film, a second oriented intermediate polymeric film, and a non-oriented polyolefin for the sealant film. Easy-tear functionality is added by surface roughening the two oriented polymer films and overlapping them in a particular formation. The particular specific order of laminating the films and the surface roughening by sandpaper provides for easy-tear properties and presumably directional tear, but this process involves additional films and extra steps to accomplish the desired tear properties.

US Patent No. 6,719,678 B1 describes a retort package design using multiple film layers whereby the intermediate layers ("burst resistant layer") are scored by a laser such that the score lines provide an easy-tear feature and a directional tear feature.

US Patent No. 6,846,532 B 1 describes a retort package design intended to reduce cost by enabling the reduction of layers from typically 4 plies to 3 plies. The heat sealable layer is a non-oriented cast polypropylene film and no directional tear properties are included.

US Patent No. 5,756,171 describes a retort package design using multiple layers of films including polyolefin film layers intended to protect the inner barrier layer from hydrolysis effects. These polyolefin film layers include a rubber-type elastomer mixed into an ethylene-propylene copolymer. However, there are no directional properties included.

US No. Patent 4,903,841 describes a retort package design that utilizes a non-oriented cast polypropylene film as the sealable layer. The films are surface-roughened or scored in a particular manner so as to impart directional tear properties.

US No. Patent 4,291,085 describes a retort package design using a non-drawn, non-oriented cast crystalline polypropylene film as the sealable layer with specific crystalline structure and orientation of the crystalline structures which must be less than 3.0. There are no directional tear properties included.

US Patent No. 5,786,050 describes an "easy opening" pouch design which has as the inner ply (which contacts the pouch's contents) a sealant film including a linear low density polyethylene; an intermediate layer composed of an oriented polyolefin with an MD/TD ratio of greater than 2; and an outermost layer of biaxially oriented PET or nylon film. The inner ply sealant of linear low density polyethylene is non-oriented. The specific orientation ratios of the intermediate film impart easy-tear properties.

US Patent No. 4,834,245 describes a pouch design having a "tearing zone" using a monoaxially oriented film with a pair of notches aligned with the tearing direction and the direction of orientation of said film. The monoaxially oriented film which imparts the "tearing zone" is on the outside of the pouch and does not contact the pouch contents and is not designed or considered to be appropriate for heat-sealability.

US Patent Application Serial No. 11/596,776 describes a pouch design including at least one uni-directionally stretched film. The preferred embodiments describe a uni-directionally stretched polypropylene film or uni-directionally stretched polyethylene terephthalate film which imparts the easy tear property. The application is silent as the sealing properties of these layers or even which layer should be the sealant film.

### Summary of the Invention

The above issues of making a sealable film with excellent sealing characteristics under retorting conditions and excellent directional and linear tear properties without using mechanical or laser perforation schemes or surface roughening and/or scoring methods are addressed. Embodiments include methods to improve the heat sealability of monoaxially oriented films resulting in an economical, highly sealable film with excellent directional tear properties suitable for retort packaging applications. Problems associated with traditional directional tear retortable polyolefin substrates in packaging applications are solved.

In some embodiments, the inventors have found that the above attributes of directional tear and heat sealability may be balanced by a formulation including an amount of 3-15 wt%, by weight of the film layer, of a propylene-butene copolymer of 15-30 wt% butene; and an optional amount of up to 10 wt% of the film layer of an ethylene-butene copolymer of 15-35 wt% butene; with the remainder of the film composition including of 97-75 wt% of an impact copolymer resin of about 10-30wt% rubber content. The directional tear property may be imparted via machine direction (MD) orientation of the cast film from about 3 times to 7 times original length. This combination of MD orientation and resin formulation provides excellent directional tear properties without compromising the high seal strength and hermetic seal properties that may be desired for retort pouches.

Accordingly, one embodiment is a monoaxially oriented film including a single layer (A) of an ethylene-propylene impact copolymer blended with an amount of metallocene-catalyzed propylene-butene elastomer. An optional amount of metallocene-catalyzed ethylene-butene elastomer may also be blended into this single layer film. This layer (A) formulation may be suitable for heat sealable applications, particularly for retort packaging applications. Another embodiment may include a laminate film in which a second polyolefin resin-containing layer (B) may be coextruded on one side of said layer (A). This second polyolefin resin-containing layer may be considered a core or base layer to provide the bulk strength of the laminate film. Preferably, this core layer (B) may also include an ethylene-propylene impact copolymer.

Furthermore, additional embodiments, the laminate may further include a third polyolefin resin-containing layer (C) on the second polyolefin resin-containing core layer (B) opposite the side with the heat sealable layer (A).

Preferably, the heat sealable layer (A) includes, as a majority component (at least 50 wt% of the layer), an ethylene-propylene impact copolymer of about 10-30 wt% ethylene-propylene rubber content. The amount of impact copolymer including the (A)-layer may be, for example, about 75-97 wt% of the layer. The (A)-layer formulation includes a minority amount of metallocene-catalyzed propylene-butene elastomer of about 15-30 wt% butene content. The amount of this propylene-butene elastomer used in the (A)-layer may be, for example, about 3-15 wt% of the (A) layer. An optional component of the (A)-layer formulation may be the use of a minority amount of metallocene-catalyzed ethylene-butene elastomer of about 15-35 wt % butene. The (A)-layer may, for example, include up to 10 wt% ethylene-butene elastomer.

This film layer (A) may be monoaxially oriented at least 3 times in the machine direction, preferably at least 4 time, more preferably at 4.8 times. Preferably, the film is monoaxilly oriented less than 7 times, more preferably less than 6.0 times. This monoaxial orientation imparts a directional tear property to the film. The resin formulation of the (A)-layer provides excellent seal initiation, seal strengths, and hermetic seal properties after monoaxial orientation, suitable for retort pouch applications.

In an embodiment of a 2-layer laminate film structure, the (A)-layer may include a sealant layer on one side of a core layer (B). Preferably, this core layer (B) includes a polyolefin resin-containing layer which in turn, includes a propylene homopolymer or propylene copolymer. More preferable is an ethylene-propylene impact copolymer of the same or similar type used as a component of the (A)-layer. The (A)-layer can be the same thickness as the (B) core layer, but preferably is thinner than the (B)-layer. For example, the (A)-layer may be about 5-50% of the total thickness of the (A) and (B) layers combined, more preferably 10-30% of the total thickness of the laminate film structure (A) and (B) layers combined. This core polyolefin resin-containing layer can also include an antiblock component selected from amorphous silicas, aluminosilicates, sodium calcium aluminum silicates, crosslinked silicone polymers, and polymethylmethacrylates to aid in machinability and winding. The side of the core layer (B) opposite the heat sealable layer (A) may be discharge-treated in order to enhance that side for laminating via adhesives, etc. Discharge-treating can be done by any of several means well known in the art, such as corona, flame, plasma, or discharge-treatment in a controlled atmosphere of selected gases.

In an embodiment of a 3-layer laminate film structure, the third layer (C) may be disposed on the side of the core layer (B) opposite the heat sealable layer (A) and preferably includes a polyolefin resin-containing layer which in turn, includes a polyolefin selected from propylene homopolymer, copolymers, terpolymers, polyethylene and combinations thereof. This third polyolefin resin-containing layer can also include an antiblock component selected from amorphous silicas, aluminosilicates, sodium calcium aluminum silicates, crosslinked silicone polymers, and polymethylmethacrylates to aid in machinability and winding. The third polyolefin layer can also be a discharge-treated layer having a surface for lamination, metallizing, printing, or coating with adhesives or inks.

In the case of a film structure including only one layer, such as sealable layer (A), one side of this layer may be discharge-treated for lamination, metallizing, printing, or coating, while leaving the opposite side untreated in order to maintain heat sealable properties. Discharge-treating this layer can result in the treated side having a narrower seal range due to crosslinking of the ethylene and butene constituents of the blend Thus, at least one side must be left untreated in order to obtain the full and useful heat seal range. In the case of a 2-layer (or more) laminate structure wherein the sealable layer (A) is contiguous with a polyolefin core layer (B), it is preferable to discharge-treat the side of the core layer opposite the sealable layer (A) for purposes of laminating, printing, metallizing, coating, etc.

Discharge-treatment in the above embodiments can be accomplished by several different manners, including but not limited to corona, flame, plasma, or corona in a controlled atmosphere of selected gases. Preferably, in one variation, the discharge-treated surface has a corona discharge-treated surface formed in an atmosphere of CO₂ and N₂ to the exclusion of O₂. The laminate film embodiments may further include a vacuum-deposited metal layer on the discharge-treated layer's surface. Preferably, the metal layer has a thickness of about 5 to 100 nm, has an optical density of about 1.5 to 5.0, and includes aluminum. In one variation, the laminate film may be an extruded laminate film.

Additional embodiments include monoaxially oriented polyolefin films with a heat sealable layer of blends of ethylene-propylene impact copolymers with metallocene propylene-butene elastomers to enhance heat sealing properties for flexible packaging purposes. Embodiments may include laminate structures of heat sealable polyolefin layers and propylene-butene metallocene elastomer blend layers for heat sealable applications in flexible packaging.

The monoaxially oriented film may be produced via extrusion of the heat sealable layer blend through a die, whereupon the molten film layer may be quenched upon a chilled casting roll system or casting roll and water bath system and subsequently oriented in the machine direction and annealed or heat-set to minimize thermal shrinkage into a film.

In the embodiments of a multi-layer film, the laminate film may be produced via coextrusion of the heat sealable layer blend and the core layer and/or other layers through a compositing die whereupon the molten multilayer film structure may be quenched upon a chilled casting roll system or casting roll and water bath system and subsequently oriented in the machine direction and annealed or heat-set into a multi-layer film.

The various films may also be metallized via vapor-deposition, preferably a vapor-deposited aluminum layer, with an optical density of at least about 1.5, preferably with an optical density of about 2.0 to 4.0, and even more preferably between 2.3 and 3.2.

Additional advantages of this invention will become readily apparent to those skilled in the art from the following detailed description, wherein only the preferred embodiments of this invention is shown and described, simply by way of illustration of the best mode contemplated for carrying out this invention. As will be realized, this invention is capable of other and different embodiments, and its details are capable of modifications in various obvious respects, all without departing from this invention. Accordingly, the examples and description are to be regarded as illustrative in nature and not as restrictive.

### Detailed Description of the Invention

This invention relates to a monoaxially oriented heat sealable propylene-based film which exhibits excellent sealability and directional tearability. This film may be well-suited as the sealable film component for retort pouch packaging applications. In addition, it may be suitable for packages that are hand-tearable. The films may allow for the tear line to be controlled and consistent across the top of the pouch and parallel to the top of the pouch, without causing "zippering" of the pouch and subsequent potential loss of the contents. The described films combine both excellent seal strengths and hermetic seals suitable for retorting and directional tear, obviating the need for perforation techniques to enable directional tear.

In one embodiment of the invention, the laminate film includes a single-layer extruded film of: A mixed polyolefin resin layer including an isotactic ethylene-propylene impact copolymer and an amount of an amorphous metallocene-catalyzed propylene-butene elastomer with an optional amount of amorphous metallocene-catalyzed ethylene-butene elastomer. Another embodiment is a laminate film that includes a similar formulation as above, except that one side of the polyolefin resin layer may be discharge-treated.

The polyolefin resin layer may include an isotactic ethylene-propylene impact copolymer of a specific rubber content blended with a minority amount of metallocene-catalyzed propylene-butene elastomer and is uniaxially oriented. The impact copolymer may be an isotactic ethylene-propylene copolymer with an ethylene-propylene rubber content of about 10-30 wt% of the polymer wherein the ethylene content of the rubber may be about 10-80 wt% of the rubber. The impact copolymer may be manufactured in two reactors. In the first reactor, propylene homopolymer may be produced and conveyed to the second reactor that also contains a high concentration of ethylene. The ethylene, in conjunction with the residual propylene left over from the first reactor, copolymerizes to form an ethylene-propylene rubber. The resultant product has two distinct phases: a continuous rigid propylene homopolymer matrix and a finely dispersed phase of ethylene-propylene rubber particles.

The rubber content may be in the 10-30 wt% range depending on the desired end-use properties. It is this mixture of two phases - the propylene homopolymer matrix and the dispersed phase of ethylene-propylene rubber - that provides the impact resistance and toughening properties that impact copolymers are known for. Ethylene-propylene impact copolymers are distinctly different from conventional ethylene-propylene random copolymers which are typically polymerized in a single reactor, generally have a lower ethylene content (typically 0.5 wt% to 6 wt%) wherein the ethylene groups are randomly inserted by a catalyst along the polypropylene backbone chain, and do not include an ethylene-propylene rubber content.

A suitable example of an ethylene-propylene impact copolymer is Total Petrochemical's 5571. This resin has a melt flow rate of about 7 g/10 minutes at 230°C, a melting point of about 160-165°C, a Vicat softening point of about 148°C, and a density of about 0.905 g/cm³. Another example of a suitable ethylene-propylene impact copolymer is Total Petrochemical's 4180 with a melt flow rate of about 0.7 g/10 minutes at 230°C, a melting point of about 160-165°C, a Vicat softening point of about 150°C, and a density of about 0.905 g/cm³. Other suitable ethylene-propylene impact copolymers include Sunoco Chemical's TI-4015-F2 with a melt flow rate of 1.6 g/10minute at 230°C and a density of about 0.901 g/cm³ and ExxonMobil Chemical's PP7033E2 with a melt flow rate of about 8 g/10 minutes at 230°C and a density of about 0.9 g/cm³.

The metallocene-catalyzed propylene-butene elastomer may be blended with the suitable isotactic ethylene-propylene impact copolymer resin in an amount of 3-15 wt% of the layer, preferably 4-10 wt%. This ratio of elastomer and impact copolymer resin results in a good balance between heat seal initiation temperature, heat seal strengths, hermeticity in retorting applications, clarity, and low odor, particularly after machine direction orientation to impart directional tear characteristics. The metallocene-catalyzed propylene-butene random elastomer preferably has 20-40 wt% butene content of the elastomer and the resulting polymer is amorphous or of low crystallinity, and is of very low density compared to typical polyethylenes, polypropylenes, and polybutenes. The metallocene catalysis of such elastomers results in a narrow molecular weight distribution; typically, M_{w}/Mₙ is 2.0 polydispersity. Comonomer dispersion is also narrower than in a comparable Ziegler-Natta catalyzed elastomer. This, in turn, results in an elastomer which provides lower seal initiation temperature and maintains high seal strength when used as a heat sealant modifier.

A thermoplastic elastomer can be described as any of a family of polymers or polymer blends (e.g. plastic and rubber mixtures) that resemble elastomers in that they are highly resilient and can be repeatedly stretched and, upon removal of stress, return to close to its original shape; is melt processable at an elevated temperature (uncrosslinked); and does not exhibit significant creep properties. Thermoplastic elastomers typically have a density between 0.860 and 0.890 g/cm³ and a molecular weight M_{w} of 100,000 or greater. "Plastomers" differ from elastomers: A plastomer can be defined as any of a family of ethylene-based copolymers (i.e. ethylene alpha-olefin copolymer) that have properties generally intermediate to those of thermoplastic materials and elastomeric materials (thus, the term "plastomer") with a density of less than 0.900 g/cm³ (down to about 0.865 g/cm³) at a molecular weight M_{w} between about 5000 and 50,000, typically about 20,000 to 30,000.

Suitable and preferred metallocene-catalyzed propylene-butene elastomer materials are such as those manufactured by Mitsui Chemicals under the tradename Tafiner® and grade names XM7070 and XM7080. These are propylene-butene low molecular weight, low crystallinity copolymers. XM7070 is about 26 wt % butene content; XM7080 is about 22 wt% butene. They are characterized by a melting point of 75°C and 83°C, respectively; a Vicat softening point of 67 °C and 74°C, respectively; a density of 0.883-0.885 g/cm³; a Tg of about -15°C; a melt flow rate at 230°C of 7.0 g/10 minutes; and a molecular weight of 190,000-192,000 g/mol. XM7070 is preferred due to its higher butene content. The metallocene propylene-butene elastomers are in contrast to typical ethylene-propylene or propylene-butene or ethylene-propylene-butene random copolymers used for heat sealant resin layers in coextruded BOPP films such as Sumitomo SPX78H8 which are long-chain, high molecular weight polymers with significantly higher molecular weights on the order of 350,000 to 400,000 g/mol.

The metallocene propylene-butene elastomers are also in contrast to non-metallocene Ziegler-Natta catalyzed propylene-butene elastomers such as Mitsui Tafmer® XR110T. XR110T has a butene content of about 25.6 wt% and molecular weight of about 190,185 g/mol which is similar to XM7070, but its density of 0.89 g/cm³, melting point of 110°C, and Vicat softening point of 83°C are all higher than its metallocene-catalyzed counterpart XM7070 butene-propylene elastomer. Additionally, due to the Ziegler catalyst system, the molecular weight distribution of the non-metallocene catalyzed butene-propylene elastomer XR110T is much wider than the metallocene-catalyzed butene-propylene elastomer XM7070. Consequently, the properties and heat sealable properties of a non-metallocene-catalyzed butene-propylene elastomer are much different than those of a metallocene-catalyzed butene-propylene elastomer.

An optional amount of a metallocene-catalyzed ethylene-butene copolymer elastomer may also be added to this polyolefin sealant blend of an amount up to 10 wt% of the layer. The addition of this metallocene ethylene-butene copolymer elastomer in addition to the metallocene propylene-butene copolymer elastomer can help to improve further seal initiation temperature properties, although the use of metallocene ethylene-butene elastomer can sacrifice overall heat seal strengths which may be critical in some retort packaging applications. A suitable and preferred metallocene-catalyzed ethylene-butene elastomer is Mitsui Tafmer® A4085S grade. A4085S has a butene content of about 15-35 wt% of the polymer, a melt flow rate of about 6.7 g/10 minutes at 230°C, melting point of about 75 °C, Tg of about -65 to -50°C, Vicat softening point of about 67°C, and a density of about 0.885 g/cm³. Suitable amounts of this metallocene ethylene-butene elastomer may be less than 10 wt% of the layer, preferably 3-4 wt% of the layer.

This mixed resin layer of impact copolymer and metallocene elastomer may be 50 µm to 200 µm in thickness after monoaxial orientation, preferably between 60 µm and 150 µm, and more preferably between 70 µm and 100 µm in thickness. The mixed resin layer can also be surface treated on one side with an electrical corona-discharge treatment method, flame treatment, atmospheric plasma, or corona discharge in a controlled atmosphere of nitrogen, carbon dioxide, or a mixture thereof, with oxygen excluded and its presence minimized. The latter method of corona treatment in a controlled atmosphere of a mixture of nitrogen and carbon dioxide results in a treated surface that includes nitrogen-bearing functional groups, preferably at least 0.3 atomic% or more, and more preferably, at least 0.5 atomic% or more. The discharge-treated mixed resin layer is then well suited for subsequent purposes of laminating, coating, printing, or metallizing.

In this embodiment, an optional amount of antiblocking agent may be added to the mixed resin film layer for aiding machinability and winding. An amount of an inorganic antiblock agent can be added in the amount of 100-5,000 ppm of the core resin layer, preferably 500-1000 ppm. Preferred types of antiblock are spherical sodium aluminum calcium silicates or amorphous silica of nominal 6 µm average particle diameter, but other suitable spherical inorganic antiblocks can be used including crosslinked silicone polymer or polymethylmethacrylate, and ranging in size from 2 µm to 6 µm. Migratory slip agents such as fatty amides and/or silicone oils can also be optionally employed in the film layer either with or without the inorganic antiblocking additives to aid further with controlling coefficient of friction and web handling issues. Suitable types of fatty amides are those such as stearamide or erucamide and similar types, in amounts of 100-5000ppm of the layer. Preferably, stearamide is used at 500-1000ppm of the layer. A suitable silicone oil that can be used is a low molecular weight oil of 350 centistokes which blooms to the surface readily at a loading of 400-600ppm of the layer. However, if the films are to be used for metallizing or high definition process printing, it is recommended that the use of migratory slip additives be avoided in order to maintain metallized barrier properties and adhesion or to maintain high printing quality in terms of ink adhesion and reduced ink dot gain.

In the embodiments of a multi-layer film such as a 2-layer laminate film or a three-layer laminated film, the mixed resin layer of the previously described impact copolymer and metallocene elastomers can be coextruded with another layer. In the embodiment of a 2-layer laminate film structure, the mixed resin layer (A) may include a sealant layer on one side of a core layer (B). Preferably, this core layer (B) includes a polyolefin resin-containing layer which in turn, includes a propylene homopolymer or propylene copolymer. More preferable is an ethylene-propylene impact copolymer of the same or similar type used as a component of the (A)-layer such as the previously described Total 5571 isotactic ethylene-propylene impact copolymer or other similar grades mentioned. The (A)-layer can be the same thickness as the (B) core layer, but preferably is thinner than the (B)-layer, for example about 5-50% of the total thickness of the (A) and (B) layers combined, more preferably 10-30% of the total thickness of the laminate film structure (A) and (B) layers combined. This core polyolefin resin-containing layer can also include an antiblock component selected from the group consisting of amorphous silicas, aluminosilicates, sodium calcium aluminum silicates, crosslinked silicone polymers, and polymethylmethacrylates to aid in machinability and winding. Migratory slip additives such as fatty amides or silicone oils may also be added as previously described if desired. The side of the core layer (B) opposite the heat sealable layer (A) may be discharge treated in order to enhance that side for laminating via adhesives, etc. Discharge-treating can be done by any of several means well known in the art, such as corona, flame, plasma, or discharge-treatment in a controlled atmosphere of selected gases as described previously.

In the embodiment of a 3-layer laminate film structure, a third layer (C) may be disposed on the side of the core layer (B) opposite the heat sealable mixed resin layer (A) and preferably includes a polyolefin resin-containing layer which in turn, includes a polyolefin selected from the group consisting of propylene homopolymer, copolymers, terpolymers, polyethylene and combinations thereof. This third layer (C) may be thinner than the core layer (B) and may have a thickness ranging 2 - 30% of the combined thickness of the 3 layers together, preferably about 5-10% of the overall thickness of the multi-layer laminate. This third polyolefin resin-containing layer can also include an antiblock component selected from the group consisting of amorphous silicas, aluminosilicates, sodium calcium aluminum silicates, crosslinked silicone polymers, and polymethylmethacrylates to aid in machinability and winding and/or migratory slip additives such as fatty amides or silicone oils.. The third polyolefin layer can also be a discharge-treated layer having a surface for lamination, metallizing, printing, or coating with adhesives or other materials.

In all these embodiments, the film layer is monoaxially oriented in the machine direction to a certain amount. It is this monoaxial orientation that imparts the directional or linear tearing properties that make it useful in pouching applications. It is the combination of this monoaxial orientation with the heat sealable resin formulation of isotactic ethylene-propylene impact copolymer of specified rubber content and ethylene content with the metallocene-catalyzed propylene-butene elastomer of specific butene content that allows excellent and suitable heat seal initiation and seal strengths fit-for-use in retort pouch applications and excellent directional and linear tear properties.

The amount of monoaxial machine direction orientation may be about 3 - 7 times in the machine direction, preferably 4 - 7 times, and more preferably 4.8 to 6.0 times. Suitably clean and linear tear properties are found at these monoaxial orientation rates. However, above a 7:1 machine direction orientation ratio, processability issues may result such as film breakage which can affect the product cost and machine efficiency; below a 3:1 machine direction orientation ratio, processability issues such as uneven film profile, gauge bands, and uneven stretch marks can occur which also can result in higher product costs and lower machine efficiencies.

In the above embodiments of multi-layer films, the respective layers can be coextruded through a multi-layer compositing die such as a 2- or 3-layer die, and cast onto a chill roll to form a solid film suitable for further processing. In the case of a single layer film, the respective layer may be extruded through a single-layer die and cast onto a chill roll to form a solid film suitable for further processing. Extrusion temperatures are typically set at 235-270°C with a resulting melt temperature at the die of about 230-250°C.

The extruded sheet may be cast onto a cooling drum at a speed of 6 to 15 mpm whose surface temperature may be controlled between 20°C and 60°C to solidify the non-oriented laminate sheet. The non-oriented laminate sheet may be stretched in the longitudinal direction at about 90°C to 110°C at a stretching ratio of about 3 to about 7 times the original length, and most preferably between about 4.8 and 7 times, and the resulting stretched sheet may be annealed or heat-set at about 130°C to 150°C in the final zones of the machine direction orientation section to reduce internal stresses and minimize thermal shrinkage and to obtain a dimensionally stable uniaxially oriented laminate sheet. After orientation, the typical film thickness may be 50-200 µm and most preferably, 70-100 µm. The uniaxially oriented sheet can then pass through a discharge-treatment process on one side of the film such as an electrical corona discharge treated to impart a suitable surface for lamination to other films as desired. The one-side treated film may be then wound into roll form.

The discharge-treated surface of the resin blend layer may be metallized. The unmetallized laminate sheet may be first wound in a roll. The roll may be placed in a metallizing chamber and the metal vapor-deposited on the discharge-treated mixed resin metal receiving layer surface. The metal film may include titanium, vanadium, chromium, manganese, iron, cobalt, nickel, copper, zinc, aluminum, gold, or palladium, the preferred being aluminum. Metal oxides can also be utilized, the preferred being aluminum oxide. The metal layer can have a thickness between 5 and 100 nm, preferably between 20 and 80 nm, more preferably between 30 and 60 nm; and an optical density between 1.5 and 5.0, preferably between 2.0 and 4.0, more preferably between 2.3 and 3.2. The metallized film may be then tested for oxygen and moisture gas permeability, optical density, metal adhesion, metal appearance and gloss, and can be made into an adhesive laminate structure.

This invention will be better understood with reference to the following examples, which are intended to illustrate specific embodiments within the overall scope of the invention.

### Example 1

A single-layer extrusion article including a mixed resin layer of an ethylene-propylene impact copolymer Total 5571 at 92 wt% of the layer and 4 wt% of metallocene-catalyzed propylene-butene elastomer Mitsui XM7070 and 4 wt% of metallocene-catalyzed ethylene-butene elastomer Mitsui A4085S was extruded and cast and monoaxially oriented in the machine direction at a 4.8:1.0 stretch ratio. The resin components were dry-blended together and extruded in a single-screw extruder and cast using a matte finish chill roll. The total thickness of this film substrate after monoaxial orientation was ca. 70 µm. The film was passed through a corona treater for discharge treatment on one side of the film and wound into roll form. The film was tested for directional tear performance, haze, and heat sealability properties.

### Example 2

Example 1 was repeated except that the mixed resin layer was oriented in the machine direction at a 5.8:1.0 stretch ratio.

### Example 3

Example 1 was repeated except that the mixed resin layer was oriented in the machine direction at a 7.0:1.0 stretch ratio.

### Example 4

A process similar to Example 1 was repeated except that the mixed resin layer was changed to 8 wt% Mitsui XM7070 and 0% Mitsui A4085S metallocene ethylene-butene elastomer. The film was oriented in the machine direction at a 6.0:1.0 stretch ratio.

### Example 5

A process similar to Example 4 was repeated except that the mixed resin layer was changed to 90 wt% Total 5571 and 10 wt% Mitsui XM7070.

### Comparative Example 1

Example 1 was repeated except that the mixed resin layer was not oriented in the machine direction. The film was oriented in the machine direction at a 1.0:1.0 stretch ratio.

### Comparative Example 2

A process similar to Example 1 was repeated except that the mixed resin layer consisted of only the Total 5571 impact copolymer at 100 wt%. No metallocene elastomers were included.

The unlaminated properties of the Examples and Comparative Examples ("CEx.") are shown in Table 1.

**TABLE 1**

| | Film Layer Composition wt% | | | | | | | |
|---|---|---|---|---|---|---|---|---|
| Sample | Total 5571 | TAFMER XM7070 | TAFMER A4085S | MD X | Directional Tear (visual) | Haze % | SIT @ 2000 g/in (°F) | Heat Seal Strength @ 350°F g/in |
| Ex. 1 | 92 | 4 | 4 | 4.8:1. 0 | Straight tear / No whitening | 72.1 | 323 | 9782 |
| Ex. 2 | 92 | 4 | 4 | 5.8:1. 0 | Straight tear / No whitening | 72.0 | 325 | 9256 |
| Ex. 3 | 92 | 4 | 4 | 7.0:1. 0 | Straight tear / No whitening | 71.7 | 330 | 8821 |
| Ex. 4 | 92 | 8 | 0 | 6.0:1. 0 | Straight tear / No whitening | 72.9 | 332 | 10,319 |
| Ex. 5 | 90 | 10 | 0 | 6.0:1. 0 | Straight tear / No whitening | 73.1 | 335 | 10,852 |
| CEx. 1 | 92 | 4 | 4 | 1.0:1. 0 | Angled tear / Whitening | 72.4 | 320 | 11,230 |
| CEx. 2 | 100 | 0 | 0 | 4.8:1. 0 | Straight tear / No whitening | 73.5 | 328 | 4627 |

As the table shows, Comparative Example 1 (CEx 1) is a non-oriented control film using the formulation blend of impact copolymer Total 5571, propylene-butene elastomer Tafmer XM7070, and ethylene-butene elastomer Tafmer A4085S at 92%, 4%, and 4% of the weight of the film, respectively. This composition had excellent seal strength, seal initiation temperature (SIT), and good haze level. However, when a film sheet is torn by hand at a notch along the machine direction, the appearance of the tear initiation point shows stress-whitening and deformation, and the torn edge is irregular and often zippers down the face of the sheet at an angle instead of parallel to the machine direction. CEx 1's directional tear is considered to be poor.

Comparative Example 2 (CEx 2) was oriented in the machine direction at a stretch ratio of 4.8:1.0 and showed excellent directional tear properties. However, no metallocene elastomers were used as modifiers to the impact copolymer. As a result, heat seal strength at 350°F is very low in comparison to the other Examples which were oriented and had contained some amounts of the metallocene elastomers. Thus, the addition of the metallocene elastomers to the impact copolymer helped to maintain heat seal strength after the required orientation to impart directional/linear tear.

Example 1 (Ex 1) shows a film that uses the same formulation as CEx 1 but was monoaxially oriented at 4.8 MDX stretch ratio. This example's heat seal strength and SIT remain very good and fit-for-use, although slightly lower than CEx 1. Haze remains very comparable. However, directional tear is extremely good with the tear propagating cleanly from the notch with no stress-whitening or deformation, and the tear itself being very straight-edged and parallel to the machine direction of the sheet. Ex. 1's directional tear is considered to be excellent and its heat seal performance good.

Example 2 (Ex 2) shows a film that uses the same formulation as CEx 1 but was monoaxially oriented at 5.8 MDX stretch ratio. This example's heat seal strength and SIT remain very good and fit-for-use, although lower than CEx 1 and Ex 1. Haze remains very comparable. However, directional tear is extremely good with the tear propagating cleanly from the notch with no stress-whitening or deformation, and the tear itself being very straight-edged and parallel to the machine direction of the sheet.

Example 3 (Ex 3) shows a film that uses the same formulation as CEx 1 but was monoaxially oriented at 7.0 MDX stretch ratio. This example's heat seal strength and SIT remain very good and fit-for-use, although lower than CEx 1, Ex 1, and Ex 2. Haze remains very comparable. However, directional tear is extremely good with the tear propagating cleanly from the notch with no stress-whitening or deformation, and the tear itself being very straight-edged and parallel to the machine direction of the sheet.

The results of Examples 1-3 show that monoaxial orientation of the film significantly improves the directional/linear tear properties compared to the non-oriented film Comparative Example. Examples 1-3 also show that the resin formulation of the selected impact copolymer type and the elastomer types maintain the desirable heat seal properties of seal initiation temperature and heat seal strength as compared to the Comparative Example. However, it can be seen that with increasing machine direction orientation stretch ratio, the seal initiation temperature is incrementally raised and the seal strength at 350°F is decreased. Without being bound by any theory, it is thought that as orientation is increased, the amorphous regions of the film becomes more ordered, thus raising its Tg and reducing entanglements during heat sealing.

Examples 4 and 5 are variations whereby only the metallocene propylene-butene elastomer is used with the impact copolymer as components of the film blend. Machine direction orientation was fixed at 6.0:1.0 stretch ratio which gave excellent directional and linear tear property. Seal initiation temperature was worsened (i.e. higher temperature) than Examples 1-3 which included the metallocene ethylene-butene elastomer as part of their composition. However, seal strength at 350°F of Examples 4 an 5 was improved over Examples 1-3 when using only the metallocene propylene-butene elastomer and may approach the seal strength of CEx. 1 which is unoriented.

Thus, the foregoing Examples show a way to maintain high seal strengths which is important in the use of retort pouching where high and hermetic seal strengths are needed to withstand the internal pouch pressure that results from retort cooking/sterilization and yet provide the desirable attribute of directional tear that is imparted from orientation stretching of the film. Since it is expected that seal performance will be worsened after orientation of the film, our invention unexpectedly has shown excellent seal performance with orientation of the film.

### Test Methods

The various properties in the above examples were measured by the following methods:

Heat seal strength: Measured by using a Sentinel sealer model 12 ASL at 25 psi, 1.0 second dwell time, with heated flat upper seal jaw Teflon coated, and unheated lower seal jaw, rubber with glass cloth covered. The film sample is heat-sealed to itself at the desired seal temperature(s) in the Sentinel sealer (e.g. 310°F). To prevent the film from sticking to the sealer's jaws, the test film can be laid onto a heat-resistant film such as a biaxially oriented nylon or polyethylene terephthalate film (PET). These two films are then folded over such that the nylon or PET film is outermost and in contact with the heated sealer jaws; the test film is then the inner layer and will seal to itself upon application of heat and pressure. A 15 - 20 um thick nylon or PET film is recommended; if too thick, this may interfere with thermal transfer to the test film. The test film should be inserted between the heat sealer's jaws such that the film's machine direction is perpendicular to the heat sealer jaws. Heat seal temperatures may be increased at desired intervals, e.g. 10°F increments. The respective seal strengths are measured using an Instron model 4201 tensile tester. The heat-sealed film samples are cut into 1-inch wide strips along the machine direction; the two unsealed tails placed in the upper and lower Instron clamps, and the sealed tail supported at a 90° angle to the two unsealed tails for a 90° T-peel test. The peak and average seal strength is recorded. The preferred value is minimum 8000 g/in at 350°F seal temperature.

Seal initiation temperature: Heat seal initiation temperature (SIT) was measured by using a Sentinel sealer model 12 ASL at 25 psi, 1.0 second dwell time, with heated flat upper seal jaw Teflon coated, and unheated lower seal jaw, rubber with glass-cloth covered. The film sample is heat-sealed to itself at various desired seal temperatures in the Sentinel sealer and then the respective seal strengths are measured using an Instron model 4201 tensile tester as discussed above for heat seal strength determination. The Seal Initiation Temperature is defined as the seal temperature at which the film demonstrated a minimum of 2000 g/in heat seal strength. The preferred SIT value is maximum 330°F or lower.

Transparency of the film was measured by measuring haze of a single sheet of film substantially in accordance with ASTM D1003. Preferred haze value is 75% or less.

Directional tear is tested qualitatively by notching a piece of test film on the edge and tearing by hand at the notch to initiate the tear. The notch is made parallel to the machine direction and the tear will be propagated along the machine direction. The tear is initiated from the notch by hand and observation made as to whether any stress-whitening or deformation occurs. As the tear is propagated, the consistency of the torn edges and the angle at which the tear propagates is observed. The preferred observation for good directional tear property is: 1) no stress-whitening or deformation; 2) torn edges are consistent and propagates cleanly; 3) the tear propagates in a straight line from the notch across the width of the sheet parallel to the machine direction. If the tear initiation at the notch shows stress-whitening or deformation; and/or the tear propagation is ragged, or is non-linear or non-parallel to the machine direction of the film, is propagated at an angle to the machine direction edge of the film; then this in considered to be unacceptable for directional or linear tear properties.

Wetting tension of the surfaces of interest was measured substantially in accordance with ASTM D2578-67. In general, the preferred value was an average value equal to or more than 40 dyne/cm with a minimum of 38 dyne/cm.

This application discloses several numerical ranges in the text and figures. The numerical ranges disclosed inherently support any range or value within the disclosed numerical ranges even though a precise range limitation is not stated verbatim in the specification because this invention can be practiced throughout the disclosed numerical ranges.

The above description is presented to enable a person skilled in the art to make and use the invention, and is provided in the context of a particular application and its requirements. Various modifications to the preferred embodiments will be readily apparent to those skilled in the art, and the generic principles defined herein may be applied to other embodiments and applications without departing from the spirit and scope of the invention. Thus, this invention is not intended to be limited to the embodiments shown, but is to be accorded the widest scope consistent with the principles and features disclosed herein. Finally, the entire disclosure of the patents and publications referred in this application are hereby incorporated herein by reference.

## Claims

1. A film comprising:
a heat sealable layer comprising an ethylene-propylene impact copolymer and 3-15 wt% of a metallocene-catalyzed propylene-butene elastomer, wherein the film is monoaxially oriented at least 4 times in the machine direction.

2. The film of claim 1, wherein the heat sealable layer further comprises a metallocene-catalyzed ethylene-butene elastomer.

3. The film of claim 1, wherein the metallocene-catalyzed propylene-butene elastomer comprises 15-30 wt% butane.

4. The film of claim 1, wherein the ethylene-propylene impact copolymer comprises 75-97 wt% of the heat sealable layer.

5. The film of claim 1, wherein the ethylene-propylene impact copolymer has a 10-30wt% rubber content.

6. A film comprising:
a heat sealable first layer as defined in any previous claim and a second layer comprising a polyolefin resin.

7. The film of claim 6, wherein the second layer comprises an ethylene-propylene impact copolymer.

8. The film of claim 7, wherein the second layer comprises the same type of ethylene-propylene impact copolymer as the heat sealable first layer.

9. The film of claim 6, wherein the film is monoaxially oriented from 4-7 times in the machine direction.

10. The film of claim 6, wherein the heat sealable first layer has a thickness of 10-30% of the heat sealable first layer and the second layer.

11. The film of claim 6, further comprising a third layer comprising a polyolefin resin on the second layer op posite the side of the heat sealable first layer.

12. The film of claim 6 or 11, wherein the second or third layer comprises an antiblock component selected from amorphous silicas, aluminosilicates, sodium calcium aluminum silicates, crosslinked silicone polymers, and polymethylmethacrylates.

13. The film of claim 6 or 11, wherein the second or third layer is discharge-treated.

14. A method of making a film according to any previous claim comprising:
extruding a film comprising a heat sealable first layer comprising an ethylene-propylene impact copolymer and 3-15 wt% of a metallocene-catalyzed propylene-butene elastomer; and monoaxially orienting the film at least 4 times its original length in the machine direction.

15. The method of claim 14, further comprising quenching the film before orienting the film, preferably further annealing the film after orienting the film.

## Patentansprüche

1. Folie, umfassend:
eine heißsiegelfähige Schicht, umfassend ein Ethylen-Propylen-Impact-Copolymer und 3-15 Gew.-% eines metallocenkatalysierten Propylen-Buten-Elastomers, wobei die Folie in Maschinenrichtung mindestens 4fach monoaxial orientiert ist.

2. Folie nach Anspruch 1, wobei die heißsiegelfähige Schicht ferner ein metallocenkatalysiertes Ethylen-Buten-Elastomer umfasst.

3. Folie nach Anspruch 1, wobei das metallocen-katalysierte Propylen-Buten-Elastomer 15-30 Gew.-% Butan umfasst.

4. Folie nach Anspruch 1, wobei das Ethylen-Propylen-Impact-Copolymer 75-97 Gew.-% der heißsiegelfähigen Schicht umfasst.

5. Folie nach Anspruch 1, wobei das Ethylen-Propylen-Impact-Copolymer einen Kautschukgehalt von 10-30 Gew.-% aufweist.

6. Folie, umfassend:
eine heißsiegelfähige erste Schicht gemäß einem der vorhergehenden Ansprüche und eine zweite Schicht, die ein Polyolefinharz umfasst.

7. Folie nach Anspruch 6, wobei die zweite Schicht ein Ethylen-Propylen-Impact-Copolymer umfasst.

8. Folie nach Anspruch 7, wobei die zweite Schicht den gleichen Typ von Ethylen-Propylen-Impact-Copolymer wie die heißsiegelfähige erste Schicht umfasst.

9. Folie nach Anspruch 6, wobei die Folie in Maschinenrichtung 4-7fach monoaxial orientiert ist.

10. Folie nach Anspruch 6, wobei die heißsiegelfähige erste Schicht eine Dicke von 10-30% der heißsiegelfähigen ersten Schicht und der zweiten Schicht aufweist.

11. Folie nach Anspruch 6, ferner umfassend eine dritte Schicht, die ein Polyolefinharz umfasst, auf der zweiten Schicht gegenüber der Seite der heißsiegelfähigen ersten Schicht.

12. Folie nach Anspruch 6 oder 11, wobei die zweite oder dritte Schicht eine Antiblockkomponente, die unter amorphen Siliciumdioxiden, Aluminosilikaten, Natriumcalciumaluminiumsilikaten, vernetzten Silikonpolymeren und Polymethylmethacrylaten ausgewählt ist, umfasst.

13. Folie nach Anspruch 6 oder 11, wobei die zweite oder dritte Schicht entladungsbehandelt ist.

14. Verfahren zur Herstellung einer Folie nach einem der vorhergehenden Ansprüche, bei dem man:
eine Folie, umfassend eine heißsiegelfähige erste Schicht, umfassend ein Ethylen-Propylen-Impact-Copolymer und 3-15 Gew.-% eines metallocenkatalysierten Propylen-Buten-Elastomers, extrudiert und die Folie in Maschinenrichtung mindestens 4fach, bezogen auf ihre ursprüngliche länge, monoaxial orientiert.

15. Verfahren nach Anspruch 14, bei dem man ferner die Folie vor der Orientierung der Folie abkühlt und vorzugsweise ferner die Folie nach der Orientierung der Folie tempert.

## Revendications

1. Film comprenant :
une couche thermoscellable comprenant un copolymère d'éthylène-propylène résistant aux chocs et 3 à 15 % en poids d'un élastomère de propylène-butène catalysé par un métallocène, dans lequel le film est orienté monoaxialement au moins 4 fois dans la direction de la machine.

2. Film selon la revendication 1, dans lequel la couche thermoscellable comprend en outre un élastomère d'éthylène-butène catalysé par un métallocène.

3. Film selon la revendication 1, dans lequel l'élastomère de propylène-butène catalysé par un métallocène comprend 15 à 30 % en poids de butane.

4. Film selon la revendication 1, dans lequel le copolymère résistant aux chocs d'éthylène-propylène comprend 75 à 97 % en poids de la couche thermoscellable.

5. Film selon la revendication 1, dans lequel le copolymère résistant aux chocs d'éthylène-propylène a une teneur en caoutchouc de 10 à 30 % en poids.

6. Film comprenant:
une première couche thermoscellable selon l'une quelconque des revendications précédentes et une deuxième couche comprenant une résine de polyoléfine.

7. Film selon la revendication 6, dans lequel la deuxième couche comprend un copolymère d'éthylène-propylène résistant aux chocs.

8. Film selon la revendication 7, dans lequel la deuxième couche comprend le même type de copolymère d'éthylène-propylène résistant aux chocs que la première couche thermoscellable.

9. Film selon la revendication 6, dans lequel le film est orienté monoaxialement 4 à 7 fois dans la direction de la machine.

10. Film selon la revendication 6, dans lequel la première couche thermoscellable a une épaisseur de 10 à 30 % de la première couche thermoscellable et de la deuxième couche.

11. Film selon la revendication 6, comprenant en outre une troisième couche comprenant une résine de polyoléfine sur la deuxième couche du côté opposé de la première couche thermoscellable.

12. Film selon la revendication 6 ou 11, dans lequel la deuxième ou troisième couche comprend un composant anti-bloc choisi parmi les silices amorphes, les aluminosilicates, les silicates de calcium-sodium-aluminium, les polymères de silicone ramifiés, et les méthacrylates de polyméthyle.

13. Film selon la revendication 6 ou 11, dans lequel la deuxième ou troisième couche est traitée par décharge.

14. Procédé de fabrication d'un film selon l'une quelconque des revendications précédentes comprenant:
l'extrusion d'un film comprenant une première couche thermoscellable comprenant un copolymère d'éthylène-propylène résistant aux chocs et 3 à 15 % en poids d'un élastomère de propylène-butène catalysé par un métallocène ; et l'orientation monoaxiale du film d'au moins 4 fois sa longueur d'origine dans la direction de la machine.

15. Procédé selon la revendication 14, comprenant en outre la trempe du film avant l'orientation du film, de préférence en outre le recuit du film après l'orientation du film.
